# FASCICULE DE BREVET EUROPEEN

(11) **EP 0 633 233 B1**
(45) Date de publication et mention de la délivrance du brevet: **06.05.1999**
(21) Numéro de dépôt: 94401504.9
(22) Date de dépôt: 01.07.1994
(51) Int. Cl.: C04B 35/80

(54) **Procédé de fabrication d'une pièce en matériau composite comprenant un renfort fibreux consolidé par voie liquide**
Verfahren zur Herstellung eines Verbundwerkstoffelements enthaltende eine auf flüssigem Wege erhaltene Faserverstärkung
Process for the preparation of a composite material element comprising a fibre reinforcement consolidated by liquid means

(30) Priorité: 05.07.1993 FR 9308177
(43) Date de publication de la demande: 11.01.1995
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Bouillon, Eric, F-33400 Talence (FR); Leluan, Jean-Luc, F-33200 Bordeaux (FR); Lavasserie, Eric, F-33130 Begles (FR)
(74) Mandataire: Joly, Jean-Jacques

(56) Documents cités:
- EP-A- 0 451 043
- EP-A- 0 495 570
- WO-A-92/00182

## Description

La présente invention concerne un procédé de fabrication d'une pièce en matériau composite comportant un renfort fibreux densifié par une matrice.

Le domaine d'application de l'invention est plus particulièrement celui des matériaux composites thermostructuraux, c'est-à-dire des matériaux composites ayant des propriétés mécaniques qui les rendent aptes à constituer des éléments de structures et pouvant conserver ces propriétés jusqu'à des températures de service élevées. Des matériaux composites thermostructuraux typiques sont les composites carbone-carbone (C-C) et les composites à matrice céramique (CMC) dans lesquels le renfort fibreux est en fibres réfractaires, carbone ou céramique.

La fabrication d'une pièce en matériau composite thermostructural comprend généralement la réalisation d'une préforme fibreuse dont la forme est voisine de celle de la pièce à fabriquer et la densification de la préforme par la matrice.

La préforme fibreuse constitue le renfort de la pièce dont le rôle est essentiel vis-à-vis des propriétés mécaniques. La préforme est obtenue à partir de textures fibreuses : fils, câbles, tresses, tissus, feutres... La mise en forme est réalisée par bobinage, tissage, empilage, et éventuellement aiguilletage de strates bidimensionnelles de tissu ou de nappes de câbles...

La densification de la préforme fibreuse consiste à combler la porosité de la préforme, dans tout le volume de celle-ci, par le matériau constitutif de la matrice.

Une première technique de densification (voie liquide) consiste à imprégner la préforme par une composition liquide contenant un précurseur du matériau de la matrice puis, éventuellement après séchage et polymérisation, à soumettre la préforme imprégnée à un traitement, généralement un traitement thermique, pour transformer le précurseur. Plusieurs cycles consécutifs, depuis l'imprégnation jusqu'au traitement thermique, sont habituellement nécessaires pour atteindre le degré souhaité de densification.

Une deuxième technique de densification (voie gazeuse) consiste à réaliser une infiltration chimique en phase vapeur du matériau constitutif de la matrice au sein de la préforme. A cet effet, la préforme est placée dans un four d'infiltration dans lequel est admise une phase gazeuse. Dans des conditions de température et de pression déterminées, la phase gazeuse pénètre jusqu'au coeur de la préforme et, au contact des fibres, le matériau constitutif de la matrice est formé par décomposition de la phase gazeuse ou réaction entre ses constituants.

Pour conserver la préforme dans la forme désirée lors de l'infiltration chimique en phase vapeur, il est usuel, au moins dans une première partie du processus de densification, de maintenir la préforme dans un outillage, généralement réalisé en graphite. Un tel outillage massif est coûteux à réaliser en particulier lorsque la préforme a une forme complexe; il nécessite aussi l'usinage de nombreux trous permettant à la phase gazeuse d'accéder à la préforme à travers l'outillage. De plus, l'outillage est fragile, lourd et encombrant.

Or, l'infiltration chimique en phase vapeur est souvent un processus long et coûteux. La présence d'outillages occupant une fraction appréciable du volume utile du four d'infiltration et présentant une inertie thermique importante constitue un élément pénalisant. De plus, il se forme inévitablement des dépôts du matériau de la matrice sur les outillages, ayant pour conséquence des rebuts non négligeables par collage entre préforme et outillage et, en tout état de cause, des variations de cotes n'autorisant plus la réutilisation des outillages en l'état. Ainsi, dans le meilleur des cas, ces dépôts nécessitent une fréquente rénovation des outillages.

La présence de l'outillage lors de l'infiltration chimique en phase vapeur n'est nécessaire que jusqu'à consolidation de la préforme. Ce stade est atteint lorsque le matériau constitutif de la matrice a été déposé en quantité suffisante pour lier les fibres dans tout le volume de la préforme afin que celle-ci, après retrait de l'outillage, reste dans la forme désirée et puisse être manipulée. La fin de la densification peut alors être réalisée sur la préforme hors outillage. Il reste que l'outillage est nécessaire au moins pendant une partie de l'infiltration, et que celle-ci doit être interrompue pour permettre le retrait de l'outillage après consolidation.

Il est donc souhaitable de pouvoir réaliser tout le processus d'infiltration chimique en phase vapeur sans nécessiter le maintien de la préforme dans un outillage.

A cet effet, il est proposé dans la demande de brevet français n° 92 01 237 du 4 février 1992 de réaliser une consolidation de la préforme par voie liquide. La texture fibreuse constitutive de la préforme est imprégnée par un précurseur de la matrice, puis est mise en forme au moyen d'un outillage (moule ou conformateur). Ensuite, le précurseur, éventuellement après séchage et polymérisation est transformé par traitement thermique afin de laisser un résidu solide qui assure la consolidation de la préforme.

Or, Pour des matériaux composites thermostructuraux, notamment les CMC, une amélioration importante de la tenue aux chocs et à la fissuration est obtenue en formant sur les fibres du renfort fibreux, avant densification, une couche d'adaptation, ou interphase appropriée. La matière constituant l'interphase est choisie pour assurer une modification du mode de propagation des fissures, évitant que celles-ci, s'étant propagées à travers la matrice, n'atteignent et ne traversent les fibres, amoindrissant ainsi les propriétés mécaniques du matériau. On pourra se référer par exemple au brevet européen EP 0 172 082 qui décrit la formation d'interphases en carbone pyrolytique ou nitrure de bore par infiltration chimique en phase vapeur.

Dans le document EP-A-0 495 570, un procédé de réalisation de matériaux composites SiC/C est décrit dans lequel une préforme fibreuse est consolidée par imprégnation d'une texture fibreuse comprenant des fils au moyen d'un liquide précurseur d'une matière consolidante, mise en forme de la texture fibreuse imprégnée, et transformation du précurseur en matière consolidante par carbonisation, et la préforme consolidée est densifiée par la matière constitutive de la matrice du matériau composite. Un revêtement des fibres de la texture fibreuse peut être formé sur la texture elle-même ou sur le composite après imprégnation et carbonisation. L'exemple 13 montre la formation d'un revêtement de carbone pyrolytique sur les fibres de la texture fibreuse, mais avant mise en forme de celle-ci.

Mais la présence de l'interphase rigidifie la texture fibreuse, entraînant des difficultés pour la mise en forme de la préforme, d'autant plus si la forme de celle-ci est complexe. Pour conserver une capacité de déformation suffisante, il est nécessaire de limiter l'épaisseur de l'interphase, ce qui accroît alors le risque de détérioration de celle-ci par déformation de la texture. Or, il est impératif, pour qu'elle remplisse efficacement son rôle, que l'interphase recouvre les fibres de la préforme de façon continue et régulière.

La présente invention a pour but de proposer un procédé de fabrication d'une pièce en matériau composite grâce auquel la formation d'une interphase et la densification par une matrice SiC obtenue par infiltration chimique en phase vapeur peuvent être réalisées sans demander d'outillage, et ce sans limitation quant à l'épaisseur de l'interphase ou sur les déformations à imposer à la texture fibreuse pour réaliser la préforme.

Ce but est atteint grâce à un procédé de fabrication d'une pièce en matériau composite comprenant un renfort fibreux densifié par une matrice, procédé comportant les étapes de :
- réalisation d'une préforme fibreuse consolidée par imprégnation d'une texture fibreuse comprenant des fils au moyen d'un liquide précurseur d'une matière consolidante, mise en forme de la texture fibreuse imprégnée, et transformation du précurseur en matière consolidante afin d'obtenir une préforme consolidée capable de conserver sa forme sans être maintenue dans un outillage,
- formation d'une couche d'interphase par dépôt d'une matière d'interphase au sein de la préforme consolidée, et
- densification de la préforme consolidée munie de la couche d'interphase par la matière constitutive de la matrice du matériau composite, procédé selon lequel, conformément à l'invention, la consolidation de la préforme fibreuse est réalisée de manière à lier entre eux les fils de la texture fibreuse tout en laissant accessible la surface des fibres constituant les fils, et la couche d'interphase est formée par infiltration chimique en phase vapeur de sorte que la matière d'interphase est déposée sur les fibres au sein des fils de la préforme consolidée, et
- la densification de la préforme consolidée munie de la couche d'interphase est réalisée par une matrice en carbure de silicium.

Il est apparu que la réalisation de l'interphase, après consolidation de la préforme par voie liquide, confère à la pièce en matériau composite obtenue des propriétés mécaniques similaires à celles de pièces en matériau composite dans lequel l'interphase est réalisée directement sur les fibres, avant densification par la matrice, et bien supérieures à celles de pièces en matériau composite dans lequel la préforme est consolidée par voie liquide puis densifiée sans dépôt intermédiaire d'une interphase. Il est ainsi montré qu'il n'est pas nécessaire de réaliser l'interphase sur les fibres nues pour que les propriétés mécaniques soient optimales.

Un tel résultat est obtenu sans demander d'outillage de maintien, notamment dans le cas d'une densification de la préforme par infiltration chimique en phase vapeur. Il s'agit là d'un avantage considérable par rapport aux procédés de l'art antérieur dans lesquels un tel outillage était indispensable pour l'infiltration, ne serait-ce qu'au stade de la consolidation de la préforme. En effet, comme cela a été souligné au début de la description, les outillages de maintien sont onéreux, fragiles et encombrants et représentent une part importante dans le coût élevé des opérations d'infiltration.

Le procédé conforme à l'invention comprend les étapes successives de préparation d'une texture fibreuse de renfort, mise en forme et consolidation de la texture fibreuse par voie liquide, pour obtenir une préforme consolidée, dépôt d'une interphase sur la préforme consolidée, et densification de la préforme.

La texture fibreuse de départ peut être en fibres de diverses natures, en particulier des fibres de carbone ou de céramique (par exemple carbure de silicium). En vue de la mise en forme par voie liquide, la texture se présente avantageusement sous forme de strates bidimensionnelles, par exemple des couches de tissu, des nappes de fils ou de câbles, des voiles de fibres,... Las couches de tissu peuvent être formées de fils réalisés à partir de filaments continus ou discontinus.

La consolidation par voie liquide est, de façon bien connue en soi, réalisée par imprégnation de la texture fibreuse par un précurseur du matériau désiré pour la première phase de matrice assurant la consolidation. Il peut s'agir d'une résine à taux de coke élevé (résine phénolique, époxy,...), précurseur de carbone, ou de précurseurs de céramique tels que les polysilanes ou polysilazanes précurseurs de carbure de silicium, les polycarbosilanes ou autres précurseurs tels qu'obtenus par voie sol/gel, sels dissous,...

La texture fibreuse imprégnée est mise en forme par moulage, puis le précurseur est polymérisé, généralement à une température inférieure à 200°C. A ce stade, la texture mise en forme est soumise à un traitement thermique pour transformer le précurseur. Ce dernier traitement est réalisé à une température généralement comprise entre 500°C et 2 800°C, selon la nature du précurseur, la texture étant éventuellement maintenue dans le moule pour éviter des déformations.

La couche d'interphase est déposée au sein de la préforme consolidée, avec une épaisseur suffisante pour réaliser la fonction souhaitée de déviation et d'arrêt de la propagation des fissures, sans toutefois être trop importante pour laisser le volume libre nécessaire au dépôt subséquent de la matrice. Cette épaisseur est de préférence comprise entre 0,03 et 3 µm. La couche d'interphase est en un matériau tel que le carbone, plus particulièrement le pyrocarbone de type laminaire rugueux, ou le nitrure de bore, par exemple. Le dépôt de la couche d'interphase est réalisé par infiltration chimique en phase vapeur, afin de lui conférer une épaisseur aussi uniforme que possible, aucun outillage de maintien n'étant nécessaire.

La densification par la matrice SiC est réalisée par infiltration chimique en phase vapeur, sans outillage de maintien. Elle pourrait aussi être réalisée par voie liquide. Les techniques de formation de matrices SiC par voie gazeuse ou liquide sont bien connues.

Différents exemples de mise en oeuvre de l'invention seront maintenant donnés à titre indicatif mais non limitatif.

### Exemple 1

Une texture fibreuse constituée de fibres de carbone nues (sans fonction de surface, c'est-à-dire après élimination de l'ensimage) tissées avec armure satin est imprégnée par une résine phénolique et mise en forme au moyen d'un moule constitué par un outillage basse température. La résine phénolique est polymérisée. La préforme ainsi consolidée est extraite de l'outillage et la résine est carbonisée pour laisser un résidu de carbone liant les fibres entre elles. La préforme est ensuite munie d'une couche d'interphase en carbone pyrolytique d'une épaisseur d'environ 0,1 µm par infiltration chimique en phase vapeur. La couche d'interphase est réalisée de façon similaire à celle décrite dans le brevet européen EP 0 127 491 dans le cas d'une interphase formée directement sur les fibres d'une texture fibreuse. La préforme consolidée et munie de l'interphase est densifiée par une matrice de carbure de silicium obtenue par infiltration chimique en phase vapeur, comme décrit dans la demande de brevet français FR 2 401 888.

Les résultats d'essai en traction sur une éprouvette A de forme haltère ainsi fabriquée (charge maximale à rupture σ_{R}, allongement à rupture ε_{R} et module E) sont donnés au tableau I.

### Exemple 2

Il est procédé comme décrit dans l'exemple 1, à l'exception de la texture fibreuse qui est constituée de fibres de carbone munies d'une fonction de surface et tissées avec armure toile.

Les résultats d'essai en traction sur une éprouvette. B sont donnés au tableau I.

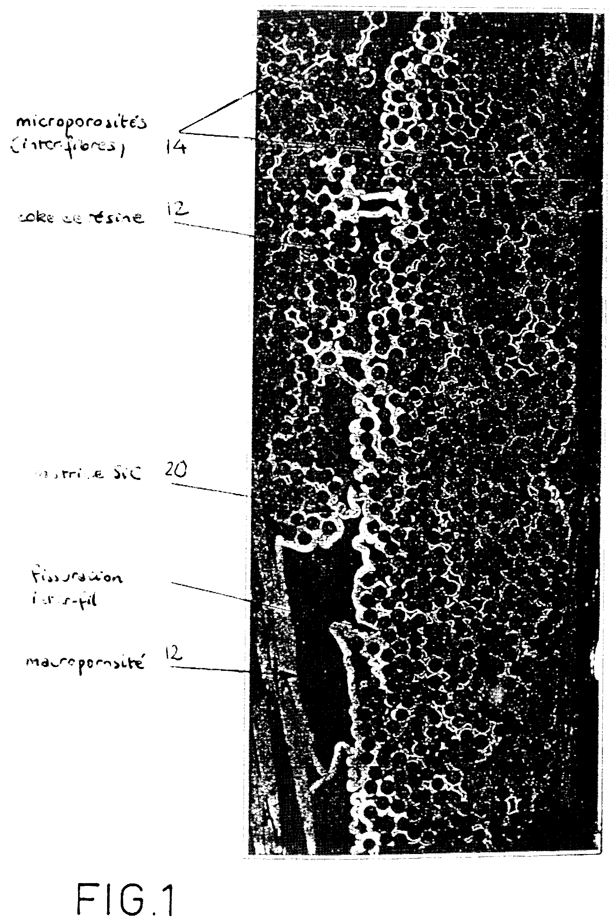

Les figures 1 à 3 sont des microphotographies du matériau obtenu.

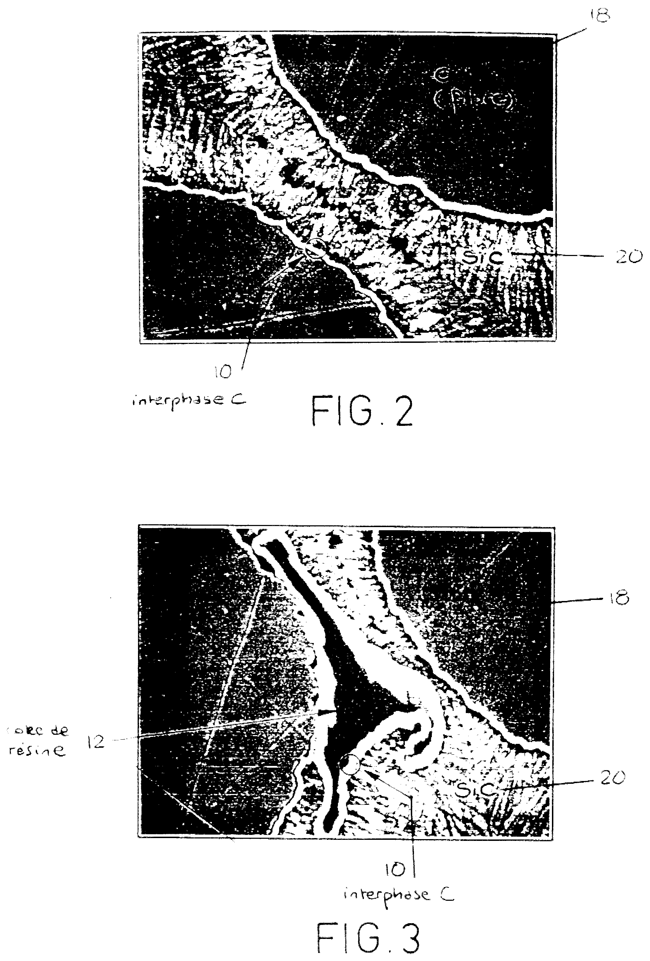

Sur la figure 1 (agrandissement par 200), on constate que le coke de résine provenant de la carbonisation de la résire phénolique relie entre eux les fils de la préforme de façon discontinue, c'est-à-dire en réalisant un collage par points entre les fils. Par contre, la résine ne pénètre pratiquement pas à l'intérieur des fils, laissant à nu une large fraction de la surface des fibres constituant les fils. De la sorte, lors de la formation de l'interphase par infiltratrion chimique en phase vapeur, le pyrocarbone peut se déposer sur les fibres, tout en gainant les "blocs" de coke de résine. C'est ce qui ressort de la figure 2 (agrandissement par 20 000) où l'on voit l'interphase pyrocarbone entre fibre C et matrice SiC, et de la figure 3 (agrandissement par 20 000) où l'on constate le caractère discontinu du coke de résine et où l'on voit l'interphase pyrocarbone gainant les fibres C et le "bloc" de coke de résine.

Sur les figures 1 à 3, c'est l'interphase pyrocarbone qui apparaît en plus clair et le coke de résine en plus foncé (à l'exception des porosités résiduelles).

### Exemple 3

Il est procédé comme décrit dans l'exemple 1, avec formation d'une interphase en carbone pyrolytique d'une épaisseur d'environ 0,5 µm par infiltration chimique en phase vapeur, l'interphase étant réalisée de la même façon que celle décrite dans le brevet européen EP 0 172 082.

Les résultats d'essai en traction sur une éprouvette C sont donnés au tableau I.

### Exemple 4

Il est procédé comme dans l'exemple 1, à l'exception de la consolidation qui est réalisée par du polysilazane, précurseur du nitrure de silicium Si₃N₄, la transformation du précurseur étant réalisée par traitement thermique à environ 1 000°C.

Les résultats d'essai en traction sur une éprouvette D sont donnés au tableau I.

A titre de comparaison, il est donné au tableau I des résultats d'essais en traction effectués sur :
- une éprouvette E obtenue selon un procédé de l'art antérieur mis en oeuvre sur la texture fibreuse de l'exemple 1 avec dépôt d'une interphase en carbone pyrolytique directement sur les fibres et densification par infiltration chimique en phase vapeur, en utilisant un outillage de maintien jusqu'à consolidation suffisante de la préforme,
- une éprouvette F obtenue selon un procédé tel que décrit dans l'exemple 2, à l'exception de la formation de la couche d'interphase.

Les résultats obtenus montrent clairement que la formation d'une interphase, après consolidation par voie liquide, apporte une amélioration très importante des propriétés mécaniques (comparaison avec l'éprouvette F), et permet d'atteindre des propriétés similaires à celles obtenues par formation de l'interphase directement sur les fibres, comme dans l'art antérieur.

**Tableau I**

| (essai en traction) | | | |
|---|---|---|---|
| Eprouvette | σ_{R} (MPa) | ε_{R} (%) | E (GPa) |
| A | 360 | 0,80 | 80 |
| B | 340 | 0,61 | 90 |
| C | 400 | 0,86 | 76 |
| D | 330 | 0,76 | 91 |
| E | 340 | | |
| F | 200 | | |

### Exemple 5

Un panneau en matériau composite C/SiC constituant un élément de structure externe d'une partie destinée à subir des échauffements importants dans un avion spatial est réalisé comme suit.

Un tissu à armure toile formé de fibres de carbone est imprégné par une résine phénolique, la masse de résine représentant 60 % de la masse totale de l'imprégné. On obtient ainsi un tissu imprégné très déformable et très collant. Plusieurs couches de tissu imprégné sont superposées et moulées en autoclave sous une pression de 10 bars, la température étant portée à 160°C, la forme de l'outillage correspondant à celle du panneau à fabriquer. Le pourcentage en masse de la résine dans l'imprégné passe de 60 % à 30 % et la résine est polymérisée. A ce stade, le taux de fibres dans la préforme est de 48 % (c'est-à-dire le pourcentage du volume apparent de la préforme effectivement occupé par les fibres).

La préforme ainsi consolidée est introduite dans un four d'infiltration chimique en phase vapeur où la résine polymérisée est du carbone et où une interphase pyrocarbone est formée par infiltration chimique en phase vapeur. La carbonisation de la résine est accomplie lors de la montée en température précédant l'infiltration du pyrocarbone. Celle-ci est réalisée jusqu'à obtenir un matériau dans lequel le taux de fibres est toujours de 48 % avec un pourcentage en volume de pyrocarbone de 12 % (l'épaisseur de l'interphase pyrocarbone étant d'environ 0,5 µm). On n'observe aucune déformation de la préforme par rapport à son état consolidé. La densification du matériau est ensuite poursuivie par infiltration chimique en phase vapeur de la matrice en carbure de silicium.

Le procédé selon l'invention est remarquable en ce que, par la réalisation d'une interphase sur une préforme consolidée par voie liquide, il permet d'obtenir les mêmes résultats, en termes de propriétés mécaniques, que les procédés de l'art antérieur dans lesquels l'interphase est formée directement sur les fibres nues. Cette préforme est atteinte sans demander d'outillage de maintient lors de phase d'infiltration chimique en phase vapeur, et sans les limitations qui sont imposées lorsque l'interphase est formée sur les fibres de la texture fibreuse avant mise en forme de la préforme.

## Revendications

1. Procédé de fabrication d'une pièce en matériau composite comprenant un renfort fibreux densifié par une matrice, comportant les étapes de :
- réalisation d'une préforme fibreuse consolidée par imprégnation d'une texture fibreuse comprenant des fils au moyen d'un liquide précurseur d'une matière consolidante, mise en forme de la texture fibreuse imprégnée, et transformation du précurseur en matière consolidante afin d'obtenir une préforme consolidée capable de conserver sa forme sans être maintenue dans un outillage,
- formation d'une couche d'interphase par dépôt d'une matière d'interphase au sein de la préforme consolidée, et
- densification de la préforme consolidée munie de la couche d'interphase par la matière constitutive de la matrice du matériau composite,
caractérisé en ce que la consolidation de la préforme fibreuse est réalisée de manière à lier entre eux les fils de la texture fibreuse tout en laissant accessible la surface des fibres constituant les fils, et la couche d'interphase est formée par infiltration chimique en phase vapeur de sorte que la matière d'interphase est déposée sur les fibres au sein des fils de la préforme consolidée, et la densification de la préforme consolidée munie de la couche d'interphase est réalisée par une matrice en carbure de silicium.

2. Procédé selon la revendication 1, caractérisé en ce que la couche d'interphase est formée par infiltration chimique en phase vapeur jusqu'à atteindre une épaisseur comprise entre 0,03 et 3 µm.

3. Procédé selon l'une quelconque des revendications 1 et 2, caractérisé en ce que la préforme est réalisée à partir d'une texture fibreuse en fibres de carbone.

## Claims

1. A method of manufacturing a part made of composite material comprising fiber reinforcement densified by a matrix, the method comprising the steps of :
- making a fiber preform that is consolidated by impregnating a fiber fabric comprising threads by means of a liquid precursor of a consolidating material, shaping the impregnated fiber fabric, and transforming the precursor into a consolidating material so as to obtain a consolidated preform that is capable of retaining its shape without being held in tooling,
- forming an interphase layer by depositing an interphase material within the consolidated preform, and
- densifying the consolidated preform provided with the interphase layer by the matrix-constituting material of the composite material,
characterised in that the fiber preform is consolidated in such a manner as to bond the threads of the fiber fabric together while allowing access to the surface of the fibers constituting the threads, and the interphase layer is formed by chemical vapour infiltration such that the interphase material is deposited on the fibers within the threads of the consolidated preform, and densification of the consolidated preform provided with the interphase layer is performed by a matrix of silicon carbide.

2. A method according to claim 1, characterised in that the interphase layer is formed by chemical vapour infiltration until it reaches a thickness lying in the range 0.03 µm to 3 µm.

3. A method according to claim 1 or claim 2, characterised in that the preform is made from a fiber fabric made up of carbon fibers.

## Patentansprüche

1. Verfahren zur Herstellung eines Teils aus Verbundwerkstoff, welcher eine Faserverstärkung aufweist, welche durch eine Matrix verdichtet ist, wobei das Verfahren die folgenden Schritte aufweist:
- Herstellung eines Faser-Vorformlings, welcher durch Imprägnierung eines Faser-Gebildes, welches Fäden aufweist, mit Hilfe eines flüssigen Vorläufers eines verfestigenden Materials verfestigt ist, Formen des imprägnierten Faser-Gebildes und Umwandlung des Vorläufers in verfestigendes Material, um einen verfestigten Vorformling zu erhalten, welcher dazu befähigt ist, seine Gestalt beizubehalten, ohne daß er in einem Werkzeug gehalten wird,
- Bildung einer Zwischenphasenschicht durch Ablagerung eines Zwischenphasenmaterials innerhalb des verfestigten Vorformlings und
- Verdichtung des verfestigten Vorformlings, welcher mit der Zwischenphasenschicht versehen ist, durch das Material, welches die Matrix des Verbundwerkstoffs bildet,
dadurch gekennzeichnet, daß die Verfestigung des Faser-Vorformlings in der Weise durchgeführt wird, daß die Fäden des Faser-Gebildes untereinander verbunden werden, indem die Oberfläche der Fasern, welche die Fäden bilden, zugänglich gelassen wird, und daß die Zwischenphasenschicht durch chemische Infiltration in einer Dampfphase gebildet wird, derart, daß das Zwischenphasenmaterial auf den Fasern innerhalb der Fäden des verfestigten Vorformlings abgelagert wird, und daß die Verdichtung des verfestigten Vorformlings, der mit der Zwischenphasenschicht versehen ist, durch eine Matrix aus Siliziumkarbid durchgeführt wird.

2. Verfahren nach Anspruch 1, dadurch gekennzeichnet, daß die Zwischenphasenschicht durch chemische Infiltration in der Dampfphase bis zum Erreichen einer Dicke im Bereich von 0,03 bis 3 µm gebildet wird.

3. Verfahren nach einem der Ansprüche 1 und 2, dadurch gekennzeichnet, daß der Vorformling ausgehend von einem Faser-Gebildes aus Kohlenstoffasern hergestellt wird.
